# EUROPEAN PATENT APPLICATION

(11) **EP 3 587 005 A1**
(43) Date of publication of application: **01.01.2020**
(21) Application number: 18179779.6
(22) Date of filing: 26.06.2018
(51) Int. Cl.: B22F 3/105, B33Y 50/02, B29C 64/393

(54) **CONTROL METHOD FOR LAYERWISE ADDITIVE MANUFACTURING, COMPUTER PROGRAM PRODUCT AND CONTROL APPARATUS**

(71) Applicant: Siemens Aktiengesellschaft, 80333 München (DE); Siemens Industry Software NV, 1930 Zaventem (BE)
(72) Inventor: Fergani, Omar, 52080 Aachen (DE); Geisen, Ole, 10781 Berlin (DE)

(57) **Abstract**

A Control method for layerwise additive manufacturing of a component (10) is provided, the method comprising the following steps:
- a) measuring a displacement (D) of an as-manufactured layer (L) of the component (10) during a build job in an additive manufacturing device (100),
- b) determining an inherent strain of the layer (L) from the determined displacement (D),
- c) calculating a residual stress and/or a distortion, based on the determined inherent strain of the layer and
- d) adapting of a substrate temperature based on the calculated residual stress and/or the calculated distortion. Further, an according computer program product is provided and a control apparatus module being configured to carry out steps of the method.

## Description

A control method for layerwise additive manufacturing, such as powder bed fusion or powder bed based additive manufacturing is provided, said manufacturing preferably relates to metallic components. Said method may, however, as well be applicable to ceramic or plastic components. Moreover a computer program or computer program product and a corresponding control apparatus are described.

Preferably, the component denotes a component applied in a turbo machine, e.g. in the flow path hardware of a gas turbine. Thus the component is preferably made of a superalloy or nickel-based alloy, e.g. a precipitation-hardened alloy.

Additive manufacturing techniques comprise for powder bed fusion techniques e.g. selective laser melting (SLM), selective laser sintering (SLS) or electron beam melting (EBM).

A method of selective laser melting is described in EP 2 601 006 B1, for example.

Additive manufacturing methods have proven to be useful and advantageous in the fabrication of prototypes or complex and filigree components, such as lightweight design or cooling components comprising e.g. mazelike internal structures. Further, additive manufacturing stands out for its short chain of process steps, wherein a manufacturing step can be carried out based on a corresponding CAD file.

Conventional apparatuses or setups for such methods usually comprise a build platform on which the component is built layer-by-layer after the feeding of a layer of a powdery base material which may then be melted, e.g. by the energy of a laser beam and subsequently solidified. The layer thickness is determined by a recoater that moves, e.g. automatically, over the powder bed and removes excess material. Typical layer thicknesses amount to between 20 µm and 40 µm. During the manufacture, said laser beam scans over the surface and melts the powder on selected areas which may be predetermined by a CAD-file according to the geometry of the component to be manufactured.

One of the main challenges in the industrialisation of additive manufacturing methods is the management or avoidance of stresses and/or distortion of the as-manufactured structure. Said thermo-mechanical effects arise from the large involved temperature gradients. Many times, in build job has to be scrapped because the structure of the respective component turned out to be insufficient for the intended use due to a large extent of defects, stresses or poor dimensional accuracy. For example, in most cases a designing and the production of a new component requires the production of physical prototypes to confirm that a distortion or dimensional accuracy lies within acceptable limits. Due to the time-consuming nature of powder bed fusion processes, the designing and manufacture of prototypes is expensive due to the required build times which may vary depending on the size and complexity of the component.

Up to now, the distortion of an additively manufactured (AM) component is determined and managed either using trial and error approaches or advanced simulation with compensation functionalities, i.e. algorithms which help to carry out the manufacturing process in a way such that the component is established with the aimed structure and geometry.

Additive Manufacturing process simulation software or the corresponding algorithms are usually based on the so-called "inherent strain" method. This is a quite complicated process as this requires the engineer to manufacture a calibration setup or model geometry, such as a cantilever (see below). Then a measurement is performed which allows to derive the inherent strain which may then be used for the actual prediction (by calculation or simulation) of stresses and distortions.

It is established in the scientific literature that the build plate or build platform temperature in an AM process may affect reducing stresses and/or distortions in an as-manufactured layer or the final component. This is due to the influence of temperature on the residual stress. Preheating e.g. reduces thermal gradients and also possibly a yield stress of the material which, in turn, reduces residual stresses by plastic flow. However, due to the complexity of the geometries of components which are suitable to be manufactured by AM and the abundance of process parameters which can be varied and possible scan strategies in the AM process, it is still difficult to derive the right temperature to minimise residual stresses and to eliminate distortion without affecting the component and machine integrity.

Today, when it is available, the build plate temperature is usually set fixed based on the type of material to be printed. Knowledge of thermal temperature management of a layer of the component to be manufactured is not yet very well elaborated and still subject to experimental research.

It is, thus, an object of the present invention to provide a solution to the given problem, particularly to establish control means which help to adjust or adapt a substrate temperature during an AM build job in an automatic, semi-automatic and, preferably, in and optimal way in terms of expected stresses and distortions in the component. More particularly a means is provided in the given disclosure which helps to calculate a residual stress and/or distortion of single as-manufactured layers based on a monitoring information.

The mentioned object is achieved by the subject-matters of the independent claims. Advantageous embodiments and refinements are subject-matter of the dependent claims.

An aspect of the present invention relates to a control method for (layerwise) additive manufacturing, particularly powder bed-based or powder bed fusion processes, of a, preferably metallic, component.

The method comprises measuring a, preferably thermally induced, displacement of an as-manufactured layer of the component, e.g. during a build job in an additive manufacturing device or machine. Said measuring is preferably performed by optical means, e.g. by recording of an image of the whole build platform or selected parts of the component being arranged or welded thereon.

The term "as-manufactured" shall mean that said layer has preferably not yet been treated thermally or by further post-processing steps, such as machining, de-powdering or similar means.

The term "displacement" may relate to any geometric variation arising from manufacturing-related effects, such as thermal gradients caused by the energy beam and the subsequent rapid cooling. The displacement may relate e.g. to thermal expansion or shrinkage in any spatial direction, i.e. the main axes of symmetry in x, y and z. Preferably, with the provided means of measurement, a displacement of the layer can be gathered in x and y directions as well as in z-direction, i.e. parallel to a build direction according to which the component is manufactured.

The term "during" preferably indicates that the component is not yet finalised, i.e. there are still layers which have to be established additively.

The method further comprises determining an inherent strain of the layer from the measured displacement.

Said "determining" may include modeling and simulation, e.g. comprising a finite element method and/or any further thermal, mechanical, or thermo-mechanical calculation.

The method further comprises calculating or predicting a residual stress and/or a distortion of the single layers based on the determined inherent strain. Said calculation may comprise a simulation, and may be carried out e.g. by computer-implemented algorithms.

The method further comprises adapting of a substrate or build platform temperature based on the calculated residual stress and/or the calculated distortion.

The term "substrate" as used herein, preferably, indicates a build platform and/or a build platform on which already several layers of or for the component have to be generated.

As an advantage of the provided control method, a systematic control approach is achieved which allows to control the temperature of the build platform and/or the mentioned substrate in situ, i.e. during the manufacturing process to minimise internal stresses and distortions of the final component. Consequently, valuable means are provided which help to dispense with time-consuming and complex prototyping of a new AM design, as well as to minimise scrap of the manufactured article. In other words, means are provided which may even significantly accelerate and improve the industrialisation of additive manufacturing, the significance of which is expected to increase in the face of the upcoming Internet of things and industrial trends of digitalization.

The presented method is, preferably, applicable to any additive manufacturing device being equipped or equipable with a monitoring device for the measurement of the displacement of single layer. The presented method may additionally be easily integrated in next-generation manufacturing execution systems, particularly independent of the underlying hardware or controls of the respective SLM or EBM device.

Moreover, said method may be implemented in an automatic way and can at least partly be carried out by a computer, or control unit of an AM device.

In an embodiment, the residual stress and/or the distortion are correlated to the substrate temperature based on the calculation in that the substrate temperature is varied if the residual stress and/or the distortion are out of an acceptable, preferably pre-defined, range.

In an embodiment, as a consequence of said variation of the substrate temperature, the residual stress and/or the distortion are reduced or, as the case may be, minimised towards an acceptable range, i.e. if the residual strain/or the distortion are found to be out of said acceptable range. According to this embodiment, an associativity or feedback between a calculated stress state and the substrate temperature may advantageously be generated. The substrate temperature may be increased or decreased so as to reduce the residual stress and/or the distortion of the measures layer, the whole as-manufactured buildup, the subsequent layers or the whole component.

Said acceptable range may be a predefined interval of values for the stress and/or distortion of the measured layer. Said interval may e.g. range from zero to an upper boundary value.

In an embodiment, the substrate temperature is controlled.

In an embodiment, the substrate temperature is controlled in that the substrate temperature is increased if the residual stress and/or the distortion of the layer exceed the acceptable range. According to this embodiment, the increased the substrate temperature may effect a reduction of thermal gradients in the vicinity of the laser spot or melt pool during the AM process. As a consequence, e.g. hot cracks or subsequent and/or propagated defects in the structure of the component may be avoided.

In an embodiment the substrate temperature is controlled in that the substrate temperature is decreased if the residual stress and/or the distortion of the layer exceed or fall below the acceptable range. This embodiment may as well be advantageous, as - depending on the geometry and the material of the final component - thermal gradients may conditionally as well need to be increased, e.g. in the case that γ or γ' phase precipitation (as in case of nickel-based superalloys) needs to be avoided or reduced.

In an embodiment, if the residual stress and/of the distortion of the layer exceed the acceptable range and this calculated residual stress and/or distortion cannot be compensated by controlling the temperature at all, the method comprises accounting for the (excessive) stresses and/or distortion by a modification of a CAD file of the component and/or modifying an existing CAM process, i.e. preferably during the manufacture of the component. Thereby, a dimensional accuracy and/or structural quality or integrity of the (final) component can possibly be complied with in advance.

In an embodiment, for a heating or temperature increase of the substrate, either thermal conduction, e.g. via the build platform, radiative heating, such as laser heating, inductive heating or electron beam heating are used. A preferred embodiment is the annealing of the substrate, i.e. preferably the build platform with already welded layers for the component, from below, as this solution allows for a comprehensive monitoring of the temperature of the whole buildup, e.g. by way of a measurement of the temperature with a plurality of temperature gauges being arranged at the build platform and/or along the build direction.

In an embodiment, the described steps of the measuring, the determining, the calculation and/or the adapting are carried out layerwise, e.g. iteratively for each layer for the component during its manufacture. This embodiment allows to embed the control method in the actual manufacturing process (chain), thereby e.g. avoiding the effort to lock the component out of the device. Moreover this embodiment significantly eases to implement the control method and a comprehensive thermal monitoring and compensating the stresses in the whole manufacturing chain.

In an embodiment, the substrate temperature is measured during the calculation.

In an embodiment, the substrate temperature is measured during the calculation, irrespective whether the residual stress and/or the distortion are in or out of the acceptable range.

In an embodiment, the displacement of the layer is measured or monitored with an optical measurement device, e.g. a camera or an optical scanner.

In an embodiment, the displacement of the layer is measured by thermographic or ultrasonic means.

In an embodiment, the calculation of the residual stress and/or the distortion of a second layer for the component is carried out based on a calculation of the residual stress and/or the distortion of a first layer (or a plurality of already manufactured layers) of the component which has already been manufactured prior to the second layer. According to this embodiment, the control method and, thus, the prediction of stresses and distortions during the build job of the component can be carried out more accurately, as the different calculations (for the different layers) may be correlated among each other.

In an embodiment, wherein the calculation of the residual stress and/or the distortion of the second layer is modified or optimised based on the calculation of the residual stress and/or distortion of the first layer. According to this embodiment - similar to the previously described embodiment - an accuracy of the control method and, thus, the prediction of stresses can be improved still further, as e.g. the underlying algorithms may even be varied and optimised.

The first layer merely exemplifies a layer of an early stage of the manufacture, wherein the second layer may merely denote a layer in a later buildup stage, as compared to the first layer.

It is apparent, that with the described improvement of the control method and/or the prediction of the stresses in the component, the component itself may be manufactured more time efficiently, e.g. due to the lack of required prototyping. Foremost, the component may, however, be awarded with a far superior structural quality and/or integrity due to the reduced stresses and distortions, possibly providing the components also with an improved dimensional accuracy.

In an embodiment, the determining of the inherent strain is carried out via a calibration in which a model geometry, e.g. a cantilever a bridge, is proposed by means of which a mechanical response of the thermal load is validated (cf. above). In other words, the model geometry shall be chosen and proposed such that simulation or calculation results for the actual manufacture of the component are predicted very reliably and accurately.

In an embodiment, the model geometry is manufactured prior to or during the actual manufacture of the component, e.g. based - in turn - on a determined inherent strain or inherent strain model.

In an embodiment, a (suitable or expedient) model geometry is automatically proposed, e.g. via a CAM process. Said proposal may be carried out by the machine, e.g. via a selection from a geometry catalogue in a database.

In an embodiment, the model geometry resembles or approaches the (final) geometry of the component to be manufactured. According to this embodiment, the actual simulation or calculation of stresses and/or distortions for or of the component can be based on reliable theoretical assumptions.

In an embodiment, the determining is carried out by calculating an average displacement and - based thereon - (re)calculating an, preferably isotropic, inherent strain. The mentioned displacement may as well relate to a distortion-induced displacement.

In an embodiment, wherein - based on the isotropic inherent strain - a directional inherent strain is calculated.

In an alternative embodiment, the model geometry is data-based and only calculated without the need to physically build a model geometry.

In an embodiment, the method comprises transferring the rendered information as described above to an additive manufacturing device.

In an embodiment, the component is a superalloy component applied in or intended for an application in the hot gas path of a gas turbine.

In an embodiment, wherein an additive manufacturing method or process, the control method is intended and/or applied for, relates to selective laser melting or electron beam melting.

A further aspect of the present invention relates to a computer program comprising instructions which, when the program or method is executed by a computer, cause the computer to carry out the steps of at least one or all of the described measuring, determining, calculating and adapting (cf. above).

A further aspect of the present invention relates to a computer program product comprising instructions which, when the program or method is executed or said product is generated by a computer, cause the computer to carry out the steps of at least one or all of the described measuring, determining, calculating and adapting (cf. above).

A further aspect of the present invention relates to a computer readable medium, preferably non-volatile storage medium, comprising instructions which, when the method or program is executed by a computer, cause the computer to carry out the steps of at least one of the described measuring, determining, calculating and adapting (cf. above).

A further aspect of the present invention relates to a control apparatus for the layerwise additive manufacture of the component, wherein said apparatus and/or a corresponding control module is configured to carry out the steps of at least one of the described measuring, determining, calculating and adapting (cf. above).

A further aspect of the present invention relates to an additive manufacturing method making use of or including the described control method.

If still further aspect of the present invention relates to a component being manufactured according to the additive manufacturing method as described above.

Advantages and embodiments relating to the described control method and/or the described computer program (product) or computer readable medium may as well pertain to the described additive manufacturing method and/or the described component, or vice versa.

Further features, expediencies and advantageous refinements become apparent from the following description of the exemplary embodiment in connection with the Figures.
Figure 1 shows a schematic side or sectional view of an additive manufacturing device.
Figure 2 shows a schematic view of a model geometry in a top view.
Figure 3 shows a schematic view of a model geometry in a side view.
Figure 4 shows in image of a physically manufactured model geometry, indicating a distortion.
Figure 5 indicate a control method according to the present invention by way of a schematic flow chart diagram.
Figure 6 illustrates, in a schematic view, a stressed or distorted state of a component.

Like elements, elements of the same kind and identically acting elements may be provided with the same reference numerals in the figures.

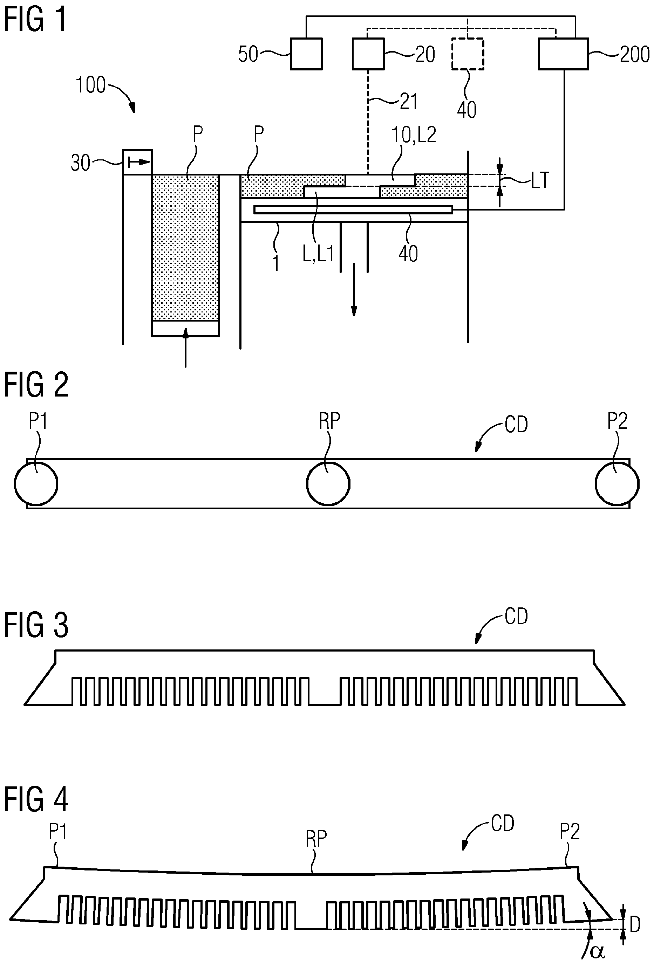

Figure 1 shows an additive manufacturing device 100. The device 100 may constitute a state-of-the-art hardware or machine for selective laser melting or electron beam melting. The device 100 comprises a build platform 1. On the build platform 1, a component 10 is, preferably, directly manufactured, i.e. welded. Preferably the component 10 is buildup in the device 100 out of a powder bed P.

Said component or part 10, preferably, relates to a turbine component, such as a component applied in the hot gas path of a gas turbine (not explicitly indicated). Particularly, the component 10 may relate to a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit.

In Figure 1, the component 10 is preferably depicted during its manufacture and only partly established yet. It is indicated that, after that deposition of a powder layer e.g. with the aid of a deposition apparatus 30, an energy beam 21 is used to selectively melt the powder for the layerwise buildup of the component 10. A layer thickness of the layer L may amount to LT, as indicated on the right in Figure 1.

Said energy beam 21 is preferably emitted from an irradiation apparatus 20, such as an electron beam or laser source. After the local melting due to the energy beam 21, the material expediently solidifies in the final structure for the component 10.

After a layer has been manufactured, the platform 1 is preferably lowered (indicated by the arrow directing downwards) by a distance corresponding to the layer thickness LT. Further, the deposition apparatus 30 preferably distributes a further powder layer which may be moved from a stock or supply (not explicitly numerically indicated) of the respective powdery base material P as shown in the left of Figure 1.

Embedded in the build platform 1, a heating device 40 is shown. Said heating device 40 may relate to any type of heating, e.g. an electrical or inductive heating equipment, or heating via thermal conduction. Said heating device is preferably configured to easily heat or warm the component - or single layers thereof - above a temperatures of 500° C, preferably above 600° C, more preferably above 700° C, such as 800° C or even higher. It is particularly preferred, that the heating device 40 (see also reference numeral 40' below) can heat the base platform 1 and/or possibly also further solidified layers L1, L2 above temperatures of 1000° C.

Said buildup comprising the build platform 1 and already manufactured layers (e.g. layers L1 and L2) may, thus, constitute a substrate, the temperature of which can be controlled according to the control method as described herein.

This heating or temperature control of the substrate (not explicitly indicated) is particularly important for the additive manufacture of hard-to-weld materials of nickel- or cobalt-based superalloys, or materials which are currently not weldable at all. Said materials may relate to PWA795, Merl72, MAR-509, Stellite-31, Hastelloy X, Haynes 230, Haynes 625, IN939, IN738, IN713, IN792, IN718, Alloy 247 or Rene 80.

Instead of the (embedded) heating device 40, an alternative or additional heating device 40' can be provided in a build space for the manufacture of the component 10, e.g. above the build platform 1. Said heating device 40' may e.g. be configured to anneal or heat the setup of the build platform 1 and/or the component 10 by radiative heating such as laser or electron beam heating.

Said heating device 40, 40' is preferably a controllable heating device, such as a PID-controlled heating device which allows to accurately adjust a given setpoint temperature to the build platform 1 and/or the whole component 10.

Figure 1 further shows a monitoring device 50 of the device 100. Said monitoring device 50 is, preferably, provided to monitor the structural quality and/or a solidification result of an as-manufactures layer L of the component 10. Said monitoring device 50 is, preferably, a microscope, a camera, such as an optical camera, a thermographical camera and/or a CMOS camera. As well, a high-speed and/or specific high-resolution cameras may be used. Alternatively, the monitoring device 50 may be a pyrometer, an eddie current probe head or any further means which may be used to supervise a solidification result of single layers during an additive build job, e.g. by way of non-destructive testing.

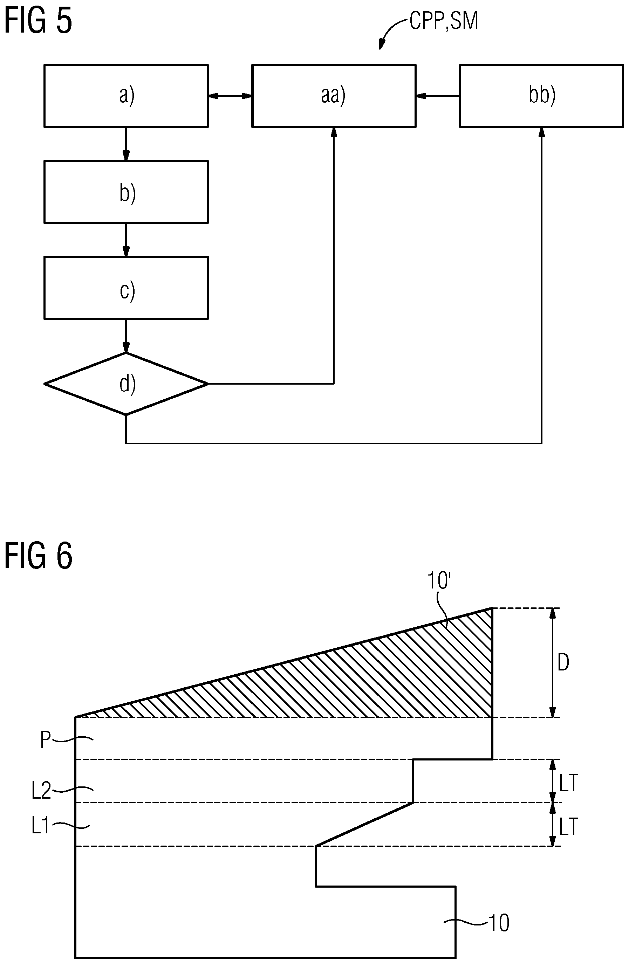

The device 100 as shown in Figure 1 further comprises a control apparatus 200. Said control apparatus 200 may comprise a control module or control unit (not explicitly indicated). Anyway, the control apparatus 200 is configured to carry out a control method as described further below by way of Figure 5. To this effect, the control apparatus may comprise a computer, processor or a central processing unit which is e.g. connected to the heating device 40 and/or the monitoring device 50 as indicated by the respective connections the Figure.

The control apparatus 200 may be configured to run single steps or all of the steps of the control method e.g. in an automated or seamlessly integrated way by computer program as will be described in Figure 5. In this regard, the control result or functionality may constitute a corresponding computer program product.

As suggested above, during the manufacture of the component 10, the structure of it is very prone to develop cracks or any other structural defects due to the large temperature gradients which are inherent to the powder bed fusion processes. Thus, there is the stringent demand to elaborate a thermal management and/or heating strategies in order to overcome said difficulties.

Figures 2 to 4 show respectively a model geometry of a calibration device CD, preferably a cantilever or bridge by means of which of a displacement measurement is illustrated. Based on said displacement measurement, in turn, later on an inherent strain can be calculated.

Figures 2 and 3 depict the calibration device CD or a corresponding model geometry in a top view and a side view, respectively. Figure 1 shows a measurement point or cloud of measurement points P1 at a left edge of the device CD. A further measurement point or cloud of measurement point P2 is shown on the right edge of the device CD. In the central part of the device CD, a reference point RP is shown which preferably serves as a reference for the displacement measurement.

The two points P1 and P2 preferably corresponds to those areas of the calibration device where a maximum displacement or distortion is expected. Whereas the reference point RP is expected to be a location which is (almost) not distorted, displaced or deflected.

Figure 3 shows a schematic side view of the calibration device CD or a corresponding model geometry. The lower part of the calibration device CD comprises ribs which constitute support structures necessary during the additive manufacture of any component comprising overhanging regions.

Figure 4 shows a physically built model of the calibration device after a separation from an underlying build platform (not explicitly indicated here). Exemplified at the point P2, a displacement of D is shown which indicates or illustrates a distortion of the calibration device due to mechanical, thermal or thermo-mechanical stresses which have preferably arisen during the manufacture of the device. Said displacement or deflection D or a corresponding angle α (cf. Figure 4) may indeed be taken as a measure to quantify a strain or stress of the calibration device CD.

During the calibration, a mechanical response (cf. displacement D) of the calibration device CD is preferably validated based on the expected thermal load its structure is subjected during the manufacture or buildup.

According to the present invention, thus, an inherent strain is determined calculated via a calibration or calibration device as described above.

The exact geometry of the calibration device may preferably be proposed by a software, e.g. from a data-based-catalogue. Said geometry, then, serves as a base for calculating the inherent strain. The more accurate or the better the calibration device resembles or geometrically approaches the final component 10, the better is preferably also the prediction or calculation of stresses and distortion of the component 10.

Said calibration device CD may e.g. be manufactured prior to and/or during the actual manufacture of the component 10.

Said model geometry may as well be automatically proposed, e.g. during or via a CAM process, wherein the model geometry can then be optimally adapted or chosen such that its geometry resembles or approaches the geometry of the final component 10 to be manufactured.

The mentioned determining is preferably carried out by calculating an average displacement and - based on that - calculating an, preferably isotropic, inherent strain. Based on the mentioned isotropic inherent strain, then, also a directional inherent strain can be determined or gathered.

Although said calibration procedure is expedient in order to accumulate good results for the stress and distortion prediction of the component 10, it is not inevitably necessary for the presented method. For instance, the described determining or calculation of the inherent strain can as well be carried out without a physical buildup of a calibration device, such as by way of a calculation only. To this effect, the geometry of a virtual calibration device can be modeled. The determining of the inherent strain can then be based on the modeled calibration geometry only.

Figure 5 indicates - in a schematic flow chart - the inventive steps of the presented control method. Said method may actually be seamlessly integrated in an additive manufacturing process or sequence, as described above. As said method may partly or entirely be carried out by a computer, thus, constituting a computer program product, all of the described flow elements in Figure 5 are summarised or integrated in a computer program or computer program product CPP. Accordingly, a result of such a computer program or a computer program product CPP may be stored on a storage medium SM. Said storage medium SM may be a, preferably, non-volatile, computer readable medium. Moreover, said medium may relate to a peer-to-peer network or a cloud- or server based repository.

The method comprises, a), measuring a displacement D of an as-manufactured layer L of the component 10, e.g. during a build job in an additive manufacturing device 100 (cf. above).

The method further comprises, b), determining an inherent strain of the layer L from the measured displacement D (cf. Figures 1 and 6 and the corresponding descriptions).

The method further comprises, c), calculating a residual stress and/or a distortion, based on the determined inherent strain of the layer L, L1, L2.

The method further comprises, d), adapting of a substrate temperature based on the calculated residual stress and/or the calculated distortion. Said adapting is, preferably, carried out in that the residual stress and/or the distortion are correlated to the substrate temperature based on the calculation, as shown by way of the arrows extending from the rhomb of step d). Preferably, it is shown by way of step aa) in Figure 5 that the substrate temperature is measured, during the calculation, irrespective whether the residual stress and/or the distortion are in or out of an acceptable range. Alternatively, the substrate temperature may be measured only in case that e.g. the stress and/or the distortion of the layer are found to be outside of the acceptable range. The verification of the stresses and/or the distortion of the layer(s) are in or out of said range may be evaluated, thus, also in step d).

Anyway, the substrate temperature is, preferably, varied, i.e. increased or decreased if the residual stress and/or the distortion are out of an acceptable range, and wherein, as a consequence of the variation of the substrate temperature, the residual stress and/or the distortion are expediently reduced. This is indicated by way of step bb) in Figure 5.

Particularly, the substrate temperature may be controlled in that the substrate temperature is increased, if the residual stress and/or the distortion of the layer L exceed the acceptable range.

The mentioned steps are - according to the present invention -preferably carried out layerwise, e.g. iteratively for each or a large number layer(s) L, such as for almost every layer or every second layer of the component 10 during its manufacture. Preferably, the component 10 or a part thereof is preferably not removed from the device 100. In other words, said control method may, preferably, entirely carried out by or initiated by the control unit 200 (cf. Figure 1).

In a particular embodiment, the calculation of the residual stress and/or the distortion of a second layer L2 for the component 10 is carried out based on a calculation of the residual stress and/or the distortion of a first layer L1 of the component 10 which has been manufactured prior to the second layer L2 (cf. Figures 1 and 6). According to this embodiment, the control method and, thus, the prediction of stresses and distortions during the build job of the component 10 can be carried out more accurately, as the different calculations (for the different layers) may be correlated among each other.

In a still further embodiment, the calculation of the residual stress and/or the distortion of the second layer L2 is modified based on the calculation of the residual stress and/or the distortion of the first layer L1 (cf. Figures 1 and 6). In other words, with the amended algorithm, an accuracy of the control method and thus the prediction of stresses can be improved still further.

Figure 6 shows - by way of a simplified sketch - a distortion or a displacement D which was already described in the context of a calibration further above. In general, the component 10 is schematically indicated according to its predefined geometry. Thereby, the hatched contour in the top part of the component shall indicate a thermal expansion of a section of the component 10 during its manufacture, more particularly due to an undue heat impact by an energy beam and/or an excessive stress. Such a distortion may lead to a scrap of the component, as a dimensional accuracy is not complied with. Further, a machine hardware, e.g. a recoating unit or deposition unit (cf. 30 in figure 1) may significantly be damaged when colliding with the distorted section of the component 10.

The described method now achieves to prevent the given effect of distortion. Thus, the component may actually be generated without the distorted portion (cf. hatched indication).

Figure 6 specifically indicates a first layer L1 and a second layer L2 being directly arranged above the first layer L1, e.g. in build direction which may correspond to the upper vertical direction in Figure 6.

Even when the presented method is implemented in a additive manufacturing device and/or an according manufacturing execution system, it may occur that the stresses the component 10 or parts thereof is subjected to during its manufacture exceed a degree (of stress and/or distortion) which can be compensated.

In this case, the whole method may - e.g. as a software feature directly connected to a CAM functionality - comprise accounting for the residual stress and/or distortion by modifying a CAD-file of the component 10 and/or modifying an existing CAM process to improve a dimensional accuracy of the component 10. If in other words and expected or calculated stress or distortion of the component is likely not to be compensated by an intelligent management of the substrate temperature during the process, the software may comprise amending the CAD file and/or the way the CAD file is processed for the manufacture online. The portion of the component 10 which experiences a significant (stress-induced) distortion can thus be accounted for in the design of the component a priori. Thus, a scrap of the component can be avoided and the component may be used for its intended purpose even though a significant distortion occurred.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Control method for layerwise additive manufacturing of a, preferably metallic, component (10) comprising the following steps:
- a) measuring a displacement (D) of an as-manufactured layer (L) of the component (10), e.g. during a build job in an additive manufacturing device (100),
- b) determining an inherent strain of the layer (L, L1, L2) from the measured displacement (D),
- c) calculating a residual stress and/or a distortion, based on the determined inherent strain of the layer, and
- d) adapting of a substrate temperature based on the calculated residual stress and/or the calculated distortion.

2. Method according to claim 1, wherein the residual stress and/or the distortion are correlated to the substrate temperature based on the calculation in that the substrate temperature is varied if the residual stress and/or the distortion are out of an acceptable range, and wherein, as a consequence of the variation of the substrate temperature, the residual stress and/or the distortion are reduced.

3. Method according to claim 1 or 2, wherein the substrate temperature is controlled in that the substrate temperature is increased, if the residual stress and/or the distortion of the layer (L) exceed the acceptable range.

4. Method according to of the previous claims, wherein, if the residual stress and/or the distortion of the layer (10) exceed the acceptable range and this calculated residual stress and/or distortion cannot be compensated by controlling the temperature, accounting for the residual stress and/or distortion by modifying a CAD-file of the component (10) and/or modifying an existing CAM process to improve a dimensional accuracy of the component (10).

5. Method according to one of the previous claims, wherein - for a heating of the substrate - either thermal conduction, e.g. via a build platform, radiative heating, such as laser heating, inductive heating or electron beam heating are used.

6. Method according to one of the previous claims, wherein steps a) to d) are carried out layerwise, e.g. iteratively for each layer (L) for the component (10) during its manufacture.

7. Method according to one of the previous claims, wherein the substrate temperature is measured during the calculation irrespective whether the residual stress and/or the distortion are in or out of the acceptable range.

8. Method according to one of the previous claims, wherein the calculation of the residual stress and/or the distortion of a second layer (L) for the component (10) is carried out based on a calculation of the residual stress and/or the distortion of a first layer (L1) of the component (10) which has been manufactured prior to the second layer (L2).

9. Method according to claim 8, wherein the calculation of the residual stress and/or the distortion of the second layer (L2) is modified based on the calculation of the residual stress and/or the distortion of the first layer (L1).

10. Method according to one of the previous claims, wherein the determining of the inherent strain is carried out via a calibration, in which a model geometry (CD), e.g. a cantilever, is proposed by means of which a mechanical response of a thermal load is validated, and wherein the model geometry is manufactured prior to or during the actual manufacture of the component (10).

11. Method according to one of the previous claims, wherein a model geometry (CD) is automatically proposed, e.g. via a CAM process, and wherein the model geometry (CD) resembles the geometry of the final component (10) to be manufactured.

12. Method according to one of the previous claims, wherein the determining is carried out by calculating an average displacement and - based on that - recalculating an isotropic inherent strain.

13. Method according to claim 11, wherein - based on the isotropic inherent strain - a directional inherent strain is calculated.

14. Computer program product (CPP) comprising instructions which, when the program is executed by a computer, cause the computer to carry out the steps of one of the previous claims.

15. Control apparatus (200) for the layerwise additive manufacture of a component (10), the control apparatus being configured to carry out at least some of steps a) to c) according to one of the previous claims.
